# EUROPEAN PATENT APPLICATION

(11) **EP 4 768 873 A1**
(43) Date of publication of application: **01.07.2026**
(21) Application number: 25225914.8
(22) Date of filing: 19.12.2025
(51) Int. Cl.: G01G 21/28

(54) **DOOR OPENING AND CLOSING MECHANISM FOR A BALANCE WINDSHIELD**

(30) Priority: 24.12.2024 JP 2024227430
(71) Applicant: A&D Company, Limited, Tokyo 170-0013 (JP)
(72) Inventor: ODA, Hisanori, Asahi, Kitamoto-shi, Saitama, 1-243 (JP); KUBOTA, Shun, Asahi, Kitamoto-shi, Saitama, 1-243 (JP)
(74) Representative: dompatent

(57) **Abstract**

Provided is a door opening and closing mechanism for a balance windshield that does not hinder the sliding opening and closing of the door even when a force in the sliding direction is applied to a lower end portion of a sliding door of the balance windshield. A door opening and closing mechanism for a balance windshield, includes: a support case having a ceiling portion and provided at an upper end portion of an opening; a guide rail provided protruding laterally from a wall portion of the support case; and a sliding door including a handle at a lower front end portion of the sliding door and guide rollers held, respectively, in multiple bearing portions at an upper end portion of the sliding door, in which the guide rail suspends the sliding door by the guide rollers. The guide rollers are held rotatably in the bearing portions by rollers on shafts and arranged on the guide rail, the bearing portions and the rollers are each arranged to have a clearance with the ceiling portion, and the clearance between the rearmost bearing portion of the sliding door and the ceiling portion is formed wider than the clearance between an upper end portion of the roller held in the rearmost bearing portion of the sliding door and the ceiling portion.

## Description

### Technical Field

The disclosure provides a technique related to a door opening and closing mechanism for opening and closing of a balance windshield.

### Background Art

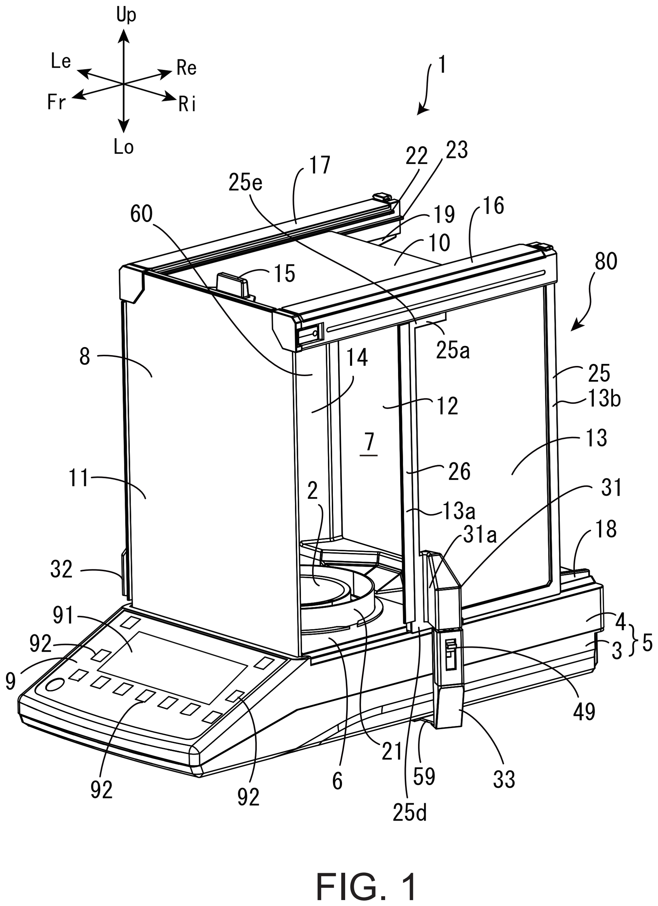

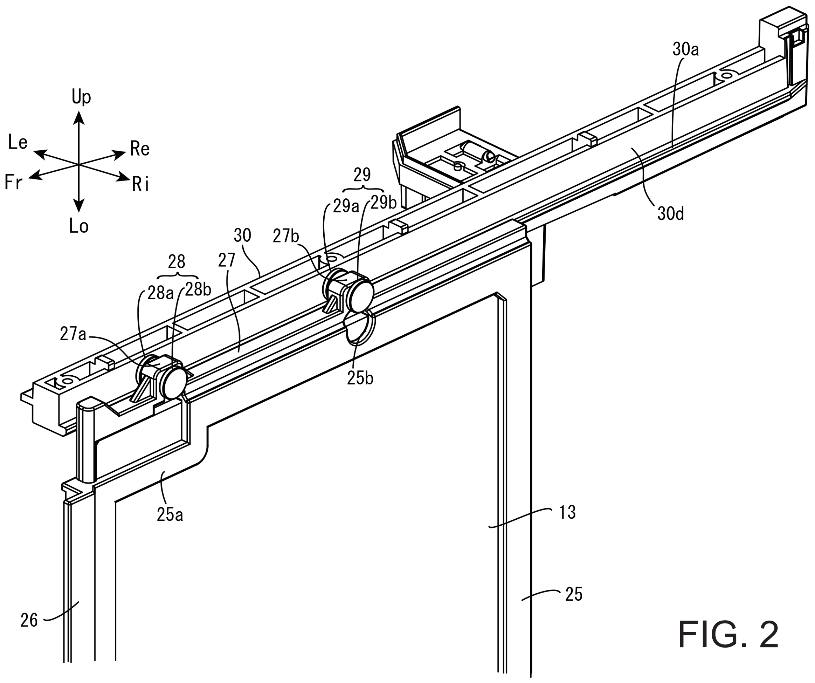

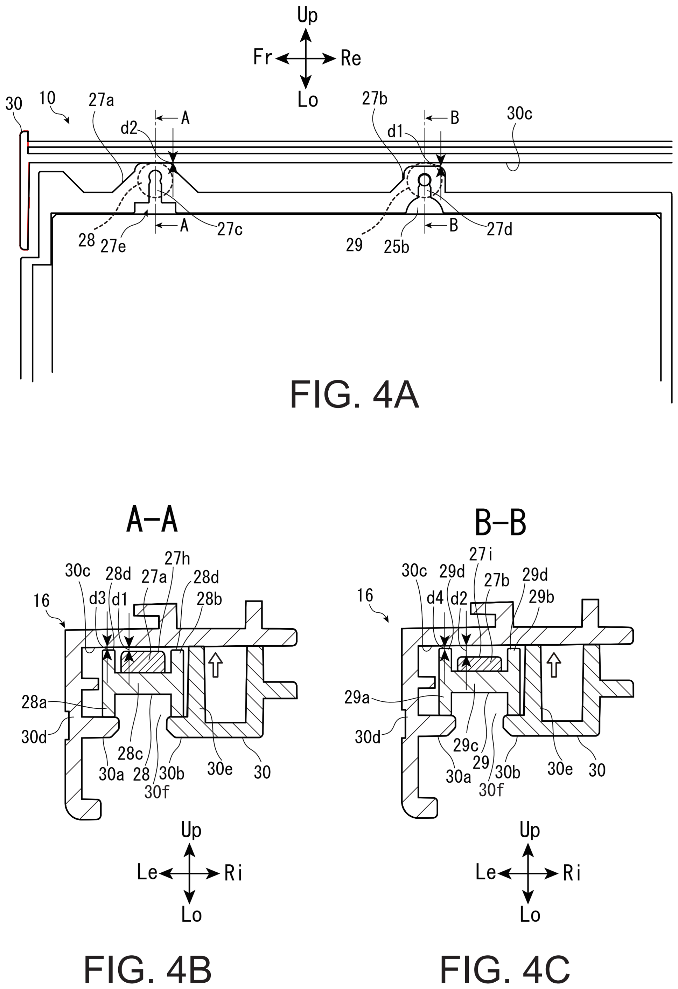

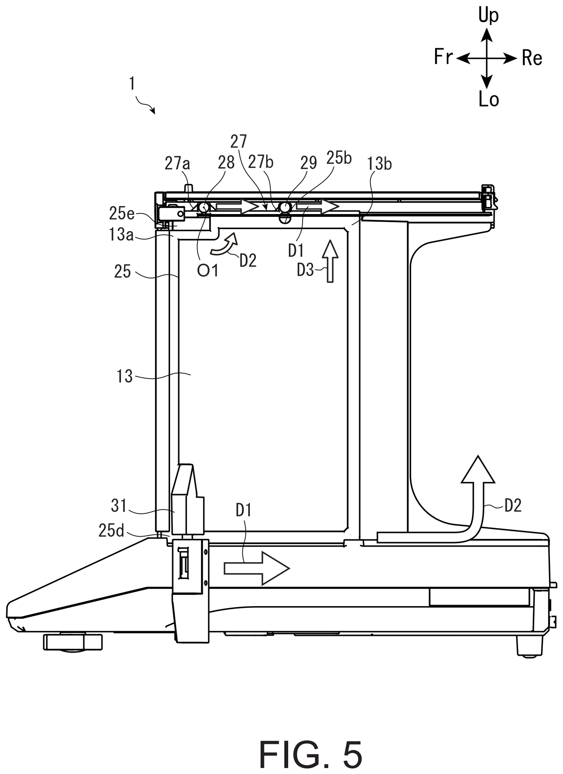

FIGS. 1 and 2 of Patent Literature 1 discloses a balance with a windshield. An upper guide rail of an upper base suspends and supports each of right and left sliding doors of the windshield, as depicted in FIGS. 4 and 5, by roller portions provided on an upper frame at an upper portion of a glass plate. Pulling a handle rearward, which is depicted in FIG. 1, provided at a lower end portion of a side frame of the glass plate causes each sliding door to be opened as in FIG. 2.

### Citation List

### Patent Literature

Patent Literature 1: WO2018/020579

### Summary

### Technical Problem

With the handle thus provided at the lower end portion of the side frame as in FIG. 1 of Patent Literature 1, each sliding door of the balance windshield is heavier at a lower end portion than at an upper end portion. This makes the frontmost roller portion less likely to roll on the guide rail, and hence the sliding door more likely to undergo a torque (moment) centered on the frontmost roller portion of the upper frame when the sliding door is opened. When the sliding door undergoes such a torque, the sliding door may rotate about a center axis of the frontmost roller portion, causing a rear end portion thereof to be raised upward with the roller portion. This may cause a problem in that a cover of the roller portion, which is depicted in FIG. 5, comes into contact with a ceiling surface of an upper support case to cause friction therebetween and hence make the sliding door more difficult to open.

In view of the foregoing problem, the disclosure provides a door opening and closing mechanism for a balance windshield that does not hinder the sliding opening and closing of the door even when a force in the sliding direction is applied to a lower end portion of a sliding door of the balance windshield.

### Solution to Problem

A door opening and closing mechanism for a balance windshield, including: a support case having a ceiling portion and a wall portion protruding downward from the ceiling portion, the support case provided at an upper end portion of an opening of a balance windshield; a guide rail protruding laterally from the wall portion of the support case; and a sliding door including a handle provided at a lower front end portion of the sliding door and multiple guide rollers held in a rollable state, respectively, in multiple bearing portions that are provided at an upper end portion of the sliding door, in which the guide rail suspends and retains the sliding door by the guide rollers, is preferably configured such that the guide rollers each have a shaft and a roller held on the shaft, the guide rollers are held rotatably in the bearing portions by the shafts and arranged rollably on the guide rail, the bearing portions and the rollers are each arranged to have a clearance with the ceiling portion, and the clearance between the rearmost bearing portion of the sliding door and the ceiling portion of the support case is formed wider than the clearance between an upper end portion of the roller held in the rearmost bearing portion of the sliding door and the ceiling portion of the support case.

This aspect operates as follows: when an operator pulls the handle provided at the lower front end portion of the sliding door to try to open the sliding door, the frontmost guide roller at the upper end portion of the sliding door becomes less likely to roll on the guide rail because the sliding door is heavier at the lower front end portion than at the upper front end portion. At that time, the sliding door undergoes a torque (moment) and may rotate about a center axis of the frontmost guide roller, causing a rear end portion thereof to be raised with the guide roller. However, even when the rear end portion of the sliding door may thus be raised, only the rearmost roller will come into contact with the ceiling portion of the support case, while the rearmost bearing portion will not come into contact with the guide rail, because the upper end portion of the rearmost bearing portion has a wider clearance with the ceiling portion of the support case than the upper end portion of the roller held therein.

The door opening and closing mechanism for a balance windshield is further preferably configured such that the upper end portion of the rearmost roller of the sliding door is arranged at a position higher than that of an upper end portion of the corresponding bearing portion.

This aspect operates as follows: even when the sliding door may undergo a torque (moment) and rotate about the center axis of the frontmost guide roller, causing the rear end portion thereof to be raised with the guide roller, only the rearmost roller will come into contact with the ceiling portion of the support case, while the rearmost bearing portion will not come into contact with the guide rail, because the upper end portion of the rearmost roller is at a position higher than that of the upper end portion of the rearmost bearing portion.

The door opening and closing mechanism for a balance windshield is preferably configured such that the guide rail has an outer guide rail and an inner guide rail formed, respectively, outside and inside an insertion groove therebetween through which the bearing portions are inserted, and the multiple guide rollers each have an outer roller and an inner roller provided, respectively, outside and inside the shaft, the outer roller arranged on the outer guide rail and the inner roller arranged on the inner guide rail.

This aspect operates as follows: even when the sliding door may undergo a torque (moment) and rotate about the center axis of the frontmost guide roller, causing the rear end portion thereof to be raised with the guide roller, only the rearmost outer and inner rollers will come into contact with the ceiling portion of the support case, while the rearmost bearing portion will not come into contact with the guide rail, because the upper end portions of both the outer and inner rollers on either side of the corresponding bearing portion are each at a position higher than that of the upper end portion of the rearmost bearing portion.

The door opening and closing mechanism for a balance windshield is further preferably configured such that a slide stopper installed to be displaceable between an opening position and a closing position is provided at a rear end portion of the guide rail.

This aspect operates as follows: with the slide switch set to the opening position, the sliding door can be installed and removed from the rear end portion of the guide rail. With the slide switch set to the closing position, the rearmost guide roller can abut against the slide switch to prevent the sliding door from coming off rearward.

### Advantageous Effects of Invention

The first aspect exhibits the following advantageous effect: even when the sliding door may rotate to cause the rear end portion thereof to be raised, a member (e.g. cover) that holds the guide roller will not come into contact with the ceiling portion of the support case, and hence friction between the ceiling portion of the support case and the rear end portion will not occur, which is unlike the related art. The rearmost roller will come into contact with the ceiling portion and rotate to make the sliding door more likely to slide. As a result, the opening and closing of the sliding door will not be hindered even when a force in the sliding direction is applied to the handle provided at the lower front end portion of the sliding door.

The second aspect exhibits the following advantageous effect: even when the sliding door may rotate to cause the rear end portion thereof to be raised, the rearmost bearing portion will not come into contact with the ceiling portion of the support case. Only the rearmost roller will come into contact with the ceiling portion to make it more likely to rotate and make the sliding door more likely to slide. As a result, the opening and closing of the sliding door will not be hindered even when a force in the sliding direction is applied to the handle provided at the lower front end portion of the sliding door.

The third aspect exhibits the following advantageous effect: even when the sliding door may rotate to cause the rear end portion thereof to be raised, the rearmost bearing portion will not come into contact with the ceiling portion of the support case. On the outside and inside of the rearmost bearing portion, the outer and inner rollers will come into contact with the ceiling portion with proper outside-inside balance. This further makes the rollers more likely to rotate and the sliding door more likely to slide. As a result, the opening and closing of the sliding door will not be hindered.

The fourth aspect exhibits the following advantageous effect: by switching the slide switch, the sliding door can be easily removed and installed, and hence make it easier to clean the area around the windshield.

### Brief Description of Drawings

FIG. 1 is a perspective view depicting an appearance of a balance that has a windshield including a door opening and closing device, according to an embodiment of the disclosure.
FIG. 2 is a partial perspective view depicting upper parts of a sliding door, guide rollers, bearing portions, and a guide rail of the door opening and closing device for the windshield, according to the embodiment.
FIG. 3A is a partial right side view depicting an upper part of a protective frame of the sliding door, FIG. 3B is an illustrative view depicting a state where the guide rollers are set in the bearing portions of FIG. 3A, and FIG. 3C is a partial right side view depicting an upper part of the sliding door with the guide rollers set in the bearing portions.
FIG. 4A is a partial right side view depicting an upper part of the protective frame of the sliding door, FIG. 4B is a cross-sectional view taken along A-A in FIG. 4A, and FIG. 4C is a cross-sectional view taken along B-B in FIG. 4A.
FIG. 5 is an illustrative view, when viewed from the right, of an internal structure of the door opening and closing device for the windshield, according to the embodiment.
FIG. 6 is an illustrative view, when viewed from the right, of an internal structure of a door opening and closing device for a conventional windshield.
FIG. 7A is an illustrative view, when viewed from the right, of an internal structure, with a slide stopper in a closing position, of the door opening and closing device for the windshield, according to the embodiment, and FIG. 7B is an illustrative view, when viewed from the right, of an internal structure, with the slide stopper in an opening position, of the door opening and closing device for the windshield, according to the embodiment.

### Description of Embodiments

A preferred embodiment of a door opening and closing mechanism for a balance windshield according to the disclosure will hereinafter be described based on FIGS. 1 to 5, 7A, and 7B. The description of the figures will use directions (front, rear, left, right, upper, lower) related to the balance as Fr, Re, Le, Ri, Up, Lo for brevity.

The embodiment of the disclosure will now be described with reference to the drawings. As depicted in FIG. 1, the electronic balance 1 (the balance set forth in the claims) includes a housing case 5 consisting of a lower case frame 3 that has a bottom plate (not depicted) and an upper case frame 4 that has a top plate, the lower case frame 3 including therein a weighing mechanism (not depicted) including a mass sensor such as an electromagnetic balance type or a load cell type coupled to a weighing tray 2 and a control unit (not depicted) configured to control various operations of the electronic balance 1, and the weighing tray 2 is at a position higher than that of a floor plate 6 that also works as the top plate of the upper case frame 4. The electronic balance 1 also includes a windshield 8 over the housing case 5 for covering the weighing tray 2 to form a weighing chamber 7. The floor plate 6, on the top thereof, has a windshield ring 21 fixed thereon that serves to prevent the influence of wind on the weighing tray 2. The housing case 5, in the front thereof, includes a control panel 9. The control panel 9, on the top thereof, includes a display unit 91 configured to display weighing results and/or states as well as multiple various touch-panel operating switches 92.

The windshield 8 in FIG. 1 prevents air flow during weighing, such as air from an air conditioner, breathing of a person during weighing, or air flow generated when a person walks, from acting as wind pressure on a load bearing portion that mainly includes the weighing tray 2 and affecting the weighing. The windshield 8 includes a top plate 10, a front plate 11, a rear plate 12, and sliding doors 13, 14 serving as a pair of right and left side plates, in which the top plate 10 and the right and left sliding doors 13, 14 are provided slidably in the front-rear direction of the housing case 5. The top plate 10 has a handle 15 fixed thereto to be grasped during manual sliding. The top plate 10, the front plate 11, the rear plate 12, and the right and left sliding doors 13, 14 are made of transparent glass or resin so that the interior can be observed. To prevent static electricity from being generated, conductive glass with a conductive film provided thereon is preferable for the glass, and conductive resin having conductivity is preferable for the resin.

The lower end of the front plate 11 in FIG. 1 is fixed into a groove in the upper case frame 4, and the upper end corners of the front plate 11 are fixed, respectively, to front end faces of a pair of support cases 16, 17 each provided at an upper part of the windshield 8 and having a bottom face with a central portion thereof in the width direction opened along the longitudinal direction. The pair of support cases 16, 17 at an upper end portion of an opening 60 of the windshield 8 are fixed at rear end portions thereof to the upper ends of support plates 18, 19 with the lower ends thereof fixed into grooves in the upper case frame 4. Only the lower end of the support plate 18 and the upper end of the support plate 19 are visible in FIG. 1.

The rear plate 12 in FIG. 1 is fixed at the lower ends thereof to the support plates 18, 19 and fixed at the upper end corners thereof to the support cases 16, 17. The top plate 10 is guided at the side ends thereof through guide rails 22, 23 (depicted only for the support case 17), which are provided in mutually opposing inner side faces of the support cases 16, 17, to be slidable in the front-rear direction of the electronic balance 1. With the top plate 10 positioned in its rearmost position, the top of the weighing chamber 7 is opened entirely, while with the top plate 10 positioned in its frontmost position, at which the top plate 10 abuts against an upper part of the front plate 11, the top of the weighing chamber 7 is closed.

Next, description will be given based on FIGS. 1 and 2 of the right and left sliding doors 13, 14 together with their suspending mechanisms. Since the right sliding door 13 has the same configuration and is arranged symmetrically with the left sliding door 14, only the right sliding door 13 will be described based on FIG. 2 and the left sliding door 14 will not be described.

As depicted in FIGS. 1 and 2, the right sliding door 13, on the periphery thereof, has a protective frame 25. The protective frame 25, at the upper left corner thereof (closer to the front plate 11), has a bent portion 25a formed in a crank shape to expose an upper left corner portion of the right sliding door 13 therethrough, and at the upper center thereof, has a circular hole 25b. The protective frame 25, on the left side thereof, has an auxiliary plate 26 fixed thereto having an L shape in a plan view. The auxiliary plate 26 is configured to abut against the front plate 11 when the right sliding door 13 is closed.

As depicted in FIG. 2, the protective frame 25, at an upper end portion thereof, has a guide member 27 (an upper end portion of each sliding door) fixed thereto that is provided with a front bearing portion 27a closer to the front end and a rear bearing portion 27b closer to the rear end. The end of the guide member 27 closer to the front plate 11 extends downward to be fixed to the bent portion 25a. It is noted that the outside and the inside in the embodiment mean the left side and the right side, respectively, with respect to the balance 1 depicted in FIG. 1. As depicted in FIGS. 4A and 4B, the front bearing portion 27a and the rear bearing portion 27b support a front guide roller 28 and a rear guide roller 29, respectively, in a rollable manner via shafts 28c, 29c, the front guide roller 28 having a pair of outer and inner rollers 28a, 28b and the rear guide roller 29 having a pair of outer and inner rollers 29a, 29b. It is noted that the outer and inner rollers 28a, 28b and the outer and inner rollers 29a, 29b all have the same form and the shafts 28c, 29c also have the same form.

As depicted in FIGS. 4A and 4B, the outer and inner rollers 28a, 28b and the outer and inner rollers 29a, 29b of the front guide roller 28 and the rear guide roller 29 are placed, respectively, on an outer guide rail 30a and an inner guide rail 30b protruding laterally from the respective lower ends of a pair of wall portions 30d, 30e protruding downward from a pair of fixed frames 30 (only the closer outer rollers 28a, 29a sides are depicted) provided in a mutually opposing manner within the support case 16. The outer guide rail 30a and the inner guide rail 30b are formed, respectively, outside and inside an insertion groove 30f therebetween through which the front bearing portion 27a and the rear bearing portion 27b are inserted. The fixed frames 30 are parts of the support case 16. With the front bearing portion 27a and the rear bearing portion 27b thus inserted through the insertion groove 30f, the front guide roller 28 and the rear guide roller 29 retained in retention grooves 27c, 27d to be described below are supported on the outer guide rail 30a and the inner guide rail 30b, causing the support case 16 to suspend and support the right sliding door 13 in FIG. 2. The lower end of the right sliding door 13 is at a position slightly away from the upper case frame 4. When the outer and inner rollers 28a, 28b and the outer and inner rollers 29a, 29b rotate, the right sliding door 13 travels in the front-rear direction depending on the direction of the rotation via the guide member 27 and the protective frame 25. The upper ends of the wall portions 30d, 30e are integrated by a ceiling portion 30c.

As depicted in FIG. 1, the pair of right and left sliding doors 13, 14 are provided with a linkage mechanism configured to engageably/disengageably link lower portions of the doors using a coupling plate 59. The right and left sliding doors 13, 14, at lower front end portions thereof, have handles 31, 32 provided as connecting members. The housing case 5 is provided with engaging/disengaging members 33 corresponding, respectively, to the right and left handles 31, 32 (engaging/disengaging member not depicted for the handle 32) . The engaging/disengaging members (33, not depicted) are connected to the coupling plate 59, which runs under the bottom surface of the housing case 5, and thereby coupled to each other. Grasping and moving upward an operating knob 49 provided on each of the engaging/disengaging members (33, not depicted) causes engaging members arranged therein to project and engageably fit into the handles 31, 32. Since the right and left engaging members are structured to work with each other as an interlocking pair, the handles 31, 32 are connected through the engaging/disengaging members (33, not depicted) and the coupling plate 59. Since this couples the pair of right and left sliding doors 13, 14, sliding to open or close one of the sliding doors causes the other sliding door to be opened or closed in synchronization in an interlocking manner. Just moving the operating knob downward causes disengagement. The disengagement allows the right and left sliding doors 13, 14 to move independently.

The support cases (16, 17), the guide rails (30a, 30b), the support members (handles 31, 32), the bearing portions (27a, 27b), the guide rollers (28, 29), and the sliding doors (13, 14) in FIG. 1 form a door opening and closing mechanism 80 for the windshield 8.

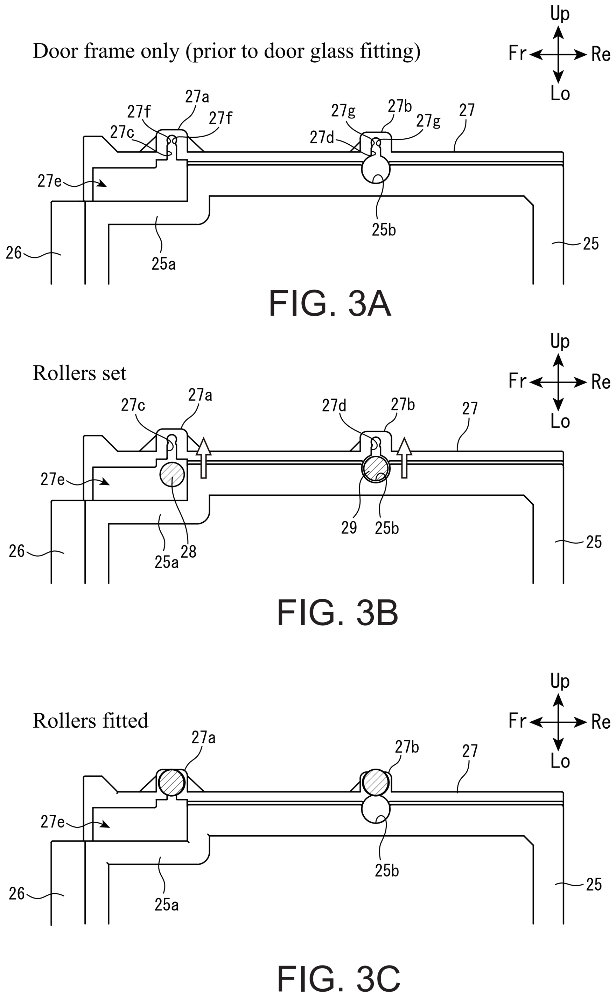

Next, description will be given based on FIGS. 3A to 3C of a structure and a method for mounting of the front and rear guide rollers (28, 29) into the sliding door 13 according to the embodiment. It is noted that the sliding door 14 has the same structure and hence undergoes the same mounting of the guide rollers as the sliding door 13. Initially, the front bearing portion 27a closer to the front end and the rear bearing portion 27b closer to the rear end of the sliding door 13 are provided, respectively, with retention grooves 27c, 27d. The retention grooves 27c, 27d have the same front-rear width as the diameter of the shafts 28c, 29c of the front and rear guide rollers 28, 29. The front retention groove 27c is formed continuously to a rectangular hole 27e that penetrates the sliding door 13 in the thickness direction. The rectangular hole 27e is a wide rectangular hole through which the front roller 28a and the rear roller 28b can be inserted, and the rear retention hole 27d is formed continuously to the circular hole 25b that penetrates the sliding door 13 in the thickness direction. The circular hole 25b has a diameter slightly greater than that of the outer roller 29a and the inner roller 29b, which are to be inserted through the circular hole 25b.

As depicted in FIG. 3A, the retention grooves 27c, 27d are provided with a pair of projections 27f, 27g, respectively, that extend further inward. Inserting the shafts 28c, 29c upward into the respective retention grooves 27c, 27d and pushing further upward in a manner that forces the projections 27f, 27g to spread apart causes the front and rear guide rollers 28, 29 to be positioned and retained rotatably at upper end portions of the retention grooves 27c, 27d.

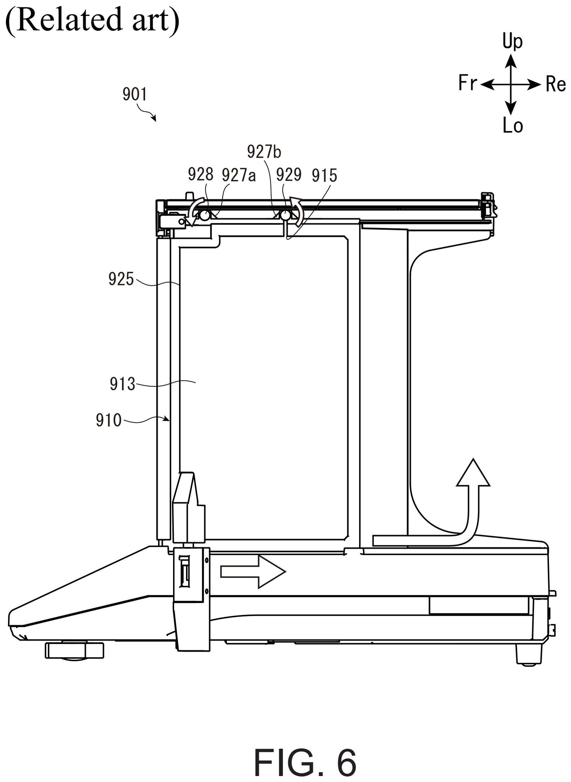

As depicted in FIG. 6, the guide roller 928 of the door opening and closing mechanism 901 for a windshield of a conventional balance is inconvenient in terms of mounting and dismounting because this structure requires that one of the outer and inner rollers of the guide roller be dismounted from the shaft (not depicted), the shaft be inserted into the hole (not depicted) of the bearing portion 927a, and the dismounted roller be remounted to the shaft. The retention groove formed in the bearing portion 927b to mount the guide roller 929 therein is a notched groove 915 that is continuous to the frame hole 913 of the protective frame 925 of the sliding door 910, which is problematic in terms of weakening the strength of the protective frame 925. The rectangular hole 27e and the circular hole 25b according to the embodiment depicted in FIG. 3A are formed continuously to the retention grooves 27c, 27d but not to the frame hole of the protective frame. Such a structure provides increased strength, with an advantage of easier positioning and retention by pushing upward over the projections 27f, 27g.

FIGS. 4B and 4C are cross-sectional views taken along A-A and B-B in FIG. 4A, depicting the front and rear guide rollers 28, 29 mounted in the retention grooves 27c, 27d. The outer roller 29a and the inner roller 29b closer to the rear end have a clearance d4 formed between the upper end portions 29d and the ceiling portion 30c of the fixed frame 30 when these rollers 29a, 29b roll on the outer guide rail 30a and the inner guide rail 30b and, also at that time, the bearing portion 27b closer to the rear end has a clearance d2 formed between the upper end portion 27i and the ceiling portion 30c of the fixed frame 30. The clearance d2 is formed sufficiently wider than the clearance d4. On the other hand, the outer roller 28a and the inner roller 28b closer to the front end have a clearance d3 formed between the upper end portions 28d and the ceiling portion 30c of the fixed frame 30 when these rollers 28a, 28b roll on the outer guide rail 30a and the inner guide rail 30b and, also at that time, the bearing portion 27a closer to the front end has a clearance d1 formed between the upper end portion 27h and the ceiling portion 30c of the fixed frame 30. The clearance d1 is formed slightly wider than the clearance d3.

It is noted that the guide members and the guide rollers may be provided in three or more sets, though these are provided in two sets in the embodiment. For three sets, the clearance d2 between the upper end portion of the rearmost bearing portion and the ceiling portion of the fixed frame should be formed sufficiently wider than the clearance d4 between the upper end portions of the outer and inner rollers of the guide roller and the ceiling portion of the fixed frame.

While the preferred embodiment of the disclosure has heretofore been described, the disclosure is not intended as being limited to the above-described embodiment but may be improved and/or modified variously, and such aspects shall also be within the scope of the disclosure.

Next description will be given based on FIG. 5 of an operation of the door opening and closing mechanism for a balance windshield. While the following description will be based on the sliding door 13 depicted, the same operation applies to the sliding door 14. The sliding door 13 is heavier at a lower front end portion 25d than at an upper front end portion 25e because the handle 31 is provided at the lower front end portion 25d. With this configuration, when an operator tries to pull the handle 31 at the lower front end portion 25d rearward in the direction D1, the front guide roller 28, which is provided closer to a front end portion 13a of the guide member 27 at the upper end portion of the sliding door 13, becomes less likely to roll on the outer guide rail 30a and the inner guide rail 30b. At this time, the sliding door 13 undergoes a torque (moment) counterclockwise in the direction D2 and may rotate in the direction D2 about a center axis O1 of the guide roller 28 closer to the front end portion 13a, causing a rear end portion 13b thereof to be raised in the direction D3 with the rear guide roller 29.

However, when the rear end portion 13b of the sliding door 13 is thus raised, only the rollers (29a, 29b) closer to the rear end portion will come into contact with the ceiling portion 30c of the fixed frame 30, while the upper end portion 27i of the bearing portion 27b closer to the rear end portion depicted in FIG. 4C will not come into contact with the ceiling portion 30c, because the upper end portion 27i of the bearing portion 27b closer to the rear end portion has a wider clearance with the ceiling portion 30c of the fixed frame 30 (a part of the support case 16) than the upper end portion 29d of the roller held therein (d2 > d4).

As thus described, even when the rear end portion 13b of the sliding door 13 is raised in this way, the rear end portion 13b will not come into contact with the ceiling portion 30c and hence friction between the ceiling portion 30c of the fixed frame 30 that forms a part of the support case 16 and the rear end portion 13b will not occur, which is unlike the related art. The outer and inner rollers 29a, 29b closer to the rear end portion will come into contact with the ceiling portion 30c and rotate to make the sliding door 13 more likely to slide rearward in the direction D1. As a result, even when a force in the rearward sliding direction is applied to the handle 31 provided at the lower front end portion 25d of the sliding door 13, the opening and closing of the sliding door 13 will not be hindered.

Alternatively, only one of the outer roller 28a and the inner roller 28b in FIG. 4C may be provided and also only the corresponding one of the outer guide rail 30a and the inner guide rail 30b may be provided (the same applies to the outer roller 29a and the inner roller 29b). However, when considering stable sliding of the sliding doors 13, 14, it is more preferable to provide both rather than omitting one.

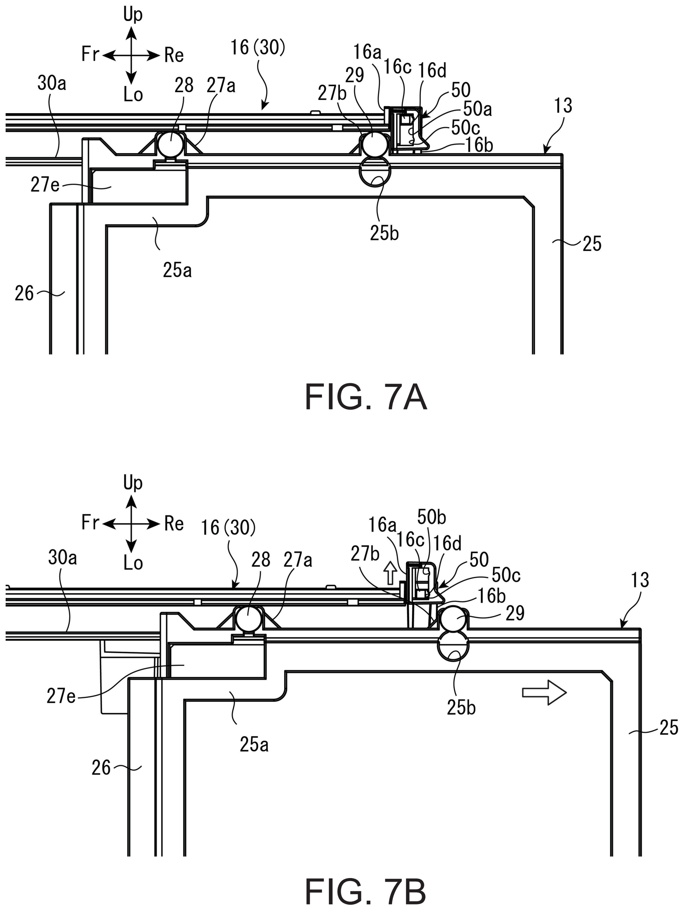

Next description will be given based on FIGS. 7A and 7B of a slide stopper 50 installed at a rear end portion of the guide rails (30a, 30b), that is, at a rear end opening 16b of the support case 16 (the same applies to the support case 17).

The support case 16, which has the outer guide rail 30a extending in the front-rear direction (inner guide rail 30b not depicted), has a rear end opening 16b at a rear end portion 16a. The rear end portion 16a, on the inner periphery thereof, has provided thereon a protrusion 16c directed inward and a small protrusion 16d that further protrudes rearward from the protrusion. The slide stopper 50 has a 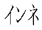 rly extending through groove 50a having the same front-rear width as the protrusion 16c as well as a small recessed portion 50b for the opening position with a size corresponding to that of the small protrusion 16d and a small recessed portion 50c for the closing position below the portion 50b, which are provided as a pair on a side wall of the through groove 50a.

The protrusion 16c of the support case 16 is configured to engage with the through groove 50a of the slide stopper 50 to be displaced up and down. The slide stopper 50 is configured to be positioned and retained at an opening position where the rear end opening 16b is opened when the small protrusion 16d on the protrusion 16c engages the small recessed portion 50b for the opening position provided at an upper part of the through groove 50a as depicted in FIG. 7B. The slide stopper 50 is also configured to be positioned and retained at a closing position where the rear end opening 16b is closed when the small protrusion 16d on the protrusion 16c engages with the small recessed portion 50c for the closing position provided at a lower part of the through groove 50a as depicted in FIG. 7A.

With the slide stopper 50 depicted in FIG. 7A pushed up into the opening position depicted in FIG. 7B, the sliding door 13 can be inserted through the rear end opening 16b of the support case 16 into the outer guide rail 30a and the inner guide rail 30b in FIG. 4B. With the slide stopper 50 pushed down into the closing position depicted in FIG. 7A, the rear guide roller 29 closer to the rear end portion 13b can abut against the slide stopper 50 to prevent the sliding door 13 on the outer and inner guide rails 30a, 30b from coming off rearward. Pushing the slide stopper 50 into the opening position and pulling the sliding door 13 out from the support case 16 allows the sliding door 13 to be removed easily from the windshield 8. The sliding door 13 can be easily installed and removed from the rear end of the windshield 8 by operating the slide stopper 50, which has the advantage of making it easier to clean the area around the windshield 8 after removing the sliding door 13. Reference Signs List
1: Balance
8: Windshield
13, 14: Sliding door
16, 17: Support case
16a: Rear end portion
27a, 27b: Bearing portion
28: Front guide roller
29: Rear guide roller
28a, 29a: Outer roller
28b, 29b: Inner roller
30a: Outer guide rail
30b: Inner guide rail
30d, 30e:wall portion
30f: Insertion groove
31, 32: Handle
30c: Ceiling portion
50: Slide stopper
60: Opening of the windshield
80: Door opening and closing mechanism
d2, d4: Clearance

## Claims

1. A door opening and closing mechanism for a balance windshield, comprising:
a support case having a ceiling portion and a wall portion protruding downward from the ceiling portion, the support case provided at an upper end portion of an opening of a balance windshield;
a guide rail protruding laterally from the wall portion of the support case; and
a sliding door comprising a handle provided at a lower front end portion of the sliding door and a plurality of guide rollers held in a rollable state, respectively, in a plurality of bearing portions that are provided at an upper end portion of the sliding door, in which the guide rail suspends and retains the sliding door by the guide rollers, wherein
the guide rollers each have a shaft and a roller held on the shaft,
the guide rollers are held rotatably in the bearing portions by the shafts and arranged rollably on the guide rail,
the bearing portions and the rollers are each arranged to have a clearance with the ceiling portion, and
the clearance between the rearmost bearing portion of the sliding door and the ceiling portion of the support case is formed wider than the clearance between an upper end portion of the roller held in the rearmost bearing portion of the sliding door and the ceiling portion of the support case.

2. The door opening and closing mechanism for a balance windshield according to claim 1, wherein
the upper end portion of the rearmost roller of the sliding door is arranged at a position higher than that of an upper end portion of the corresponding bearing portion.

3. The door opening and closing mechanism for a balance windshield according to claim 1 or 2, wherein
the guide rail has an outer guide rail and an inner guide rail formed, respectively, outside and inside an insertion groove therebetween through which the bearing portions are inserted, and
the plurality of guide rollers each have an outer roller and an inner roller provided, respectively, outside and inside the shaft, the outer roller arranged on the outer guide rail and the inner roller arranged on the inner guide rail.

4. The door opening and closing mechanism for a balance windshield according to claim 1 or 2, wherein
a slide stopper installed to be displaceable between an opening position and a closing position is provided at a rear end portion of the guide rail.
